# EUROPEAN PATENT APPLICATION

(11) **EP 3 680 499 A1**
(43) Date of publication of application: **15.07.2020**
(21) Application number: 19150723.5
(22) Date of filing: 08.01.2019
(51) Int. Cl.: F16B 31/02, F16B 33/02, F16B 39/30

(54) **CONNECTION ELEMENT**

(71) Applicant: ABB Schweiz AG, 5400 Baden (CH)
(72) Inventor: Francos, Angel Jose, Birmingham, West Midlands B16 9BD (GB); Buck, Meirion Kenneth, Sutton Coldfield, West Midlands B75 5AG (GB)
(74) Representative: Marks, Frank

(57) **Abstract**

The present invention is concerned relates to a first connection element (10) for being connected in a connection direction (R1) to a second connection element (40), comprising a male thread (20) being configured to be screwed in a screw direction (R2) into a female thread (50) of the second connection element (40), wherein the male thread (20) comprises a first surface (21) pointing in the connection direction (R1), and at least one first lip (30) being disposed on the first surface (21), such that the first lip (30) axially interferes with a second lip (60) of the second connection element (40) when the first connection element (10) is screwed into the second connection element (40).

## Description

### FIELD OF THE INVENTION

The present disclosure relates to a first connection element, in particular a screw, or a male thread element, a second connection element, in particular a nut, or a female threaded element, and a connection assembly.

### BACKGROUND OF THE INVENTION

Detachable connections between two connection elements are often implemented by friction connections like between male and female threaded elements, such as a screw and a nut. However, conventional threads of male and female threaded elements, such as screws and nuts convert rotational motion to linear motion in a smooth way. Hence, those friction-based threaded connections, or screw connections may loosen up and unscrew themselves over time, normally based on vibrations or material relaxation or creep. Additionally, when fastening such a connection, the user normally does not get any feedback from any element of the connection, if the connection is engaged correctly and /or fully, if it is fastened or if a thread of one of the connection elements strips.

### DESCRIPTION OF THE INVENTION

Therefore, there is a need for an improved vibration and creep resistant, sensory feedback producing connection element when connected.

According to an aspect of the present disclosure, a first connection element for being connected in a connection direction to a second connection element comprises a male thread being configured to be screwed in a screw direction into a female thread of the second connection element. The male thread comprises a first surface pointing in the connection direction and at least one first lip being disposed on the first surface, such that the first lip axially interferes with a second lip of the second connection element when the first connection element is screwed into the second connection element.

The torque needed to screw the first connection element into the second connection element increases every time the first lip of the first connection element and the second lip of the second connection element interfere. The first lip is configured, such that a sensory feedback by touch and an audible click is generated each time when the first lip and the second lip interfere. Thus, the connection between the first connection element and the second connection element is vibration and creep resistant. Furthermore, connecting the first connection element to the second connection element provides a sensory and audible feedback.

"Interfere" in the understanding of this disclosure means blocking each other in their respective movement. This interference is big enough that an additional force is needed to continue the respective movement and overcome the blockage. Thus, an interference can be overcome without plastically deforming the blocked means. In this case, the axial interference between a first lip and a second lip can be overcome by elastically deforming and/or abrading the first lip and the second lip using an increased torque.

In a preferred embodiment, the first connection element is a screw or a bolt comprising a male thread, in particular an external thread, on a shank and a head.

In a preferred embodiment, the male thread is a helical ridge winding around the shank of the first connection element.

In a preferred embodiment, the first connection element and/or the first lip is made of metal, plastic or wood. The first connection element and the first lip preferably are made of the same material and further preferably the first connection element and the first lip are formed integrally.

Preferably, the first surface comprises a first inclined portion and a step portion, the first inclined portion being disposed radially inside of the step portion. The first lip is disposed on the step portion.

In a preferred embodiment, when the first connection element is screwed into the second connection element, the first inclined portion abrades along a female thread, in particular a second inclined portion, of the second connection element and preferably creates friction for the friction-based connection between the first connection element and the second connection element.

The first lip is disposed on the step portion. In a preferred embodiment, the first lip extends within a width of the step portion in an axial direction. Thus, the first lip does not extend in the axial extension of the first inclined portion and does not abrade along the female thread, in particular the second inclined portion, of the second connection element.

Preferably, the first lip comprises a first interference surface pointing in the screw direction, wherein the first lip comprises a first inclined edge portion on the first interference surface. The second lip of the second connection element interferes with the first lip at the inclined edge portion when the first connection element is screwed into the second connection element.

A further embodiment could be that the first lip might comprise an additional inclined edge portion of the same embodiment on the surface of the first lip pointing opposite to the screw direction.

Thus, the torque needed to overcome the interference between the first lip of the first connection element and the second lip of the second connection element is reduced.

Preferably, the male thread comprises several thread turns, wherein on every turn only one first lip is disposed. Preferably, on every turn only one first lip is disposed. Further, preferably, the first lips are disposed equidistant to each other along the male thread. Preferably, every first lip is disposed at the same position of the respective turn.

The amount of first lips and second lips defines the torque needed to screw the first connection element into the second connection element. However, the torque needed to screw the first connection element into the second connection element depends on the lesser amount of the first lips and the second lips on the respective turn. If for example, the first connection element only comprises one first lip per turn of the male thread, the amount of second lips per turn of the female thread one does not change the amount of torque needed, as long as the amount of second lips at least matches the amount of first lips.

The more first lips and second lips are provided, the more torque is needed to screw the first connection element into the second connection element. Furthermore, the more first lips and second lips are provided, the more frequent sensory feedback by touch and audible clicks are provided while screwing the first connection element into the second connection element. However, the amount of sensory feedback per turn depends on the larger amount of the first lips and the second lips on the respective turn. If for example, the first connection element only comprises one first lip per turn of the male thread, the amount of sensory feedback per turn depends on the amount of second lips of the female thread on the respective turn.

In a preferred embodiment, the male thread of the first connection element comprises only one first lip on every turn of the male thread. Additionally, the female thread of the second connection element comprises several second lips on every turn of the female thread. When screwing the first connection element into the second connection element more torque is needed to overcome the interference between a first lip and each second lip each time a turn is performed. Furthermore, during one turn, every time the first lip interferes with one of the several second lips, a sensory feedback by a clicking noise is provided. Thus, the needed screw force is only increased once per turn, but several sensory feedbacks by touch and audible clicks are provided.

Preferably, the amount of first lips of the first connection element matches the amount of second lips of the second connection element.

According to an aspect of the present disclosure a second connection element for being connected in a connection direction to a first connection element, comprises a female thread being configured to receive a male thread of the first connection element. The female thread comprises a second surface pointing away from the connection direction. At least one second lip being disposed on the second surface, such that the second lip axially interferes with a first lip of the first connection element when the first connection element is screwed into the second connection element.

The torque needed to screw the first connection element into the second connection element increases every time the first lip of the first connection element and the second lip of the second connection element interfere. The second lip is configured, such that a sensory feedback by touch and audible click is generated each time when the first lip and the second lip interfere. Thus, the connection between the first connection element and the second connection element is vibration and creep resistant. Furthermore, connecting the first connection element to the second connection element provides a sensory feedback by touch and audible click.

In a preferred embodiment, the second connection element is a nut comprising a female thread, in particular an internal thread.

In a preferred embodiment, the female thread is a helical ridge winding at the inner side of an opening of the second connection element.

In a preferred embodiment, the second connection element and/or the second lip is made of metal, plastic or wood. The second connection element and the second lip preferably are made of the same material and further preferably the second connection element and the second lip are formed integrally.

Preferably, the second surface comprises a straight portion and a second inclined portion, the second inclined portion being disposed radially inside of the straight portion. The second lip is disposed on the straight portion.

In a preferred embodiment, when the first connection element is screwed into the second connection element, the second inclined portion abrades along a first thread, in particular a first inclined portion, of the first connection element and preferably creates friction for the friction-based connection between the first connection element and the second connection element.

The second lip is disposed on the straight portion. In a preferred embodiment, the second lip extends from the straight portion in an axial direction and extends along a radial direction within the length of the straight portion. Thus, the second lip does not extend in the radial extension of the second inclined portion and does not abrade along the male thread, in particular the first inclined portion, of the first connection element.

Preferably, the second lip comprises a second interference surface pointing opposite to the screw direction. The second lip comprises a second inclined edge portion on the second interference surface. The first lip of the first connection element interferes with the second lip at the second inclined edge portion when the first connection element is screwed into the second connection element.

A further embodiment could be that the second lip may comprise an additional inclined edge portion of the same embodiment on the surface of the second lip pointing in the screw direction.

Thus, the torque needed to overcome the interference between the first lip of the first connection element and the second lip of the second connection element is reduced.

Preferably, the female thread comprises several female turns, wherein on every female turn several second lips are disposed, preferably the second lips are disposed equidistant to each other on each turn.

The amount of first lips and second lips defines the torque needed to screw the first connection element into the second connection element. However, the torque needed to screw the first connection element into the second connection element depends on the lesser amount of the first lips and the second lips on the respective turn. If for example, the first connection element only comprises one first lip per turn of the male thread, the amount of second lips per turn of the female thread one does not change the amount of torque needed, as long as the amount of second lips at least matches the amount of first lips.

The more first lips and second lips are provided, the more torque is needed to screw the first connection element into the second connection element. Furthermore, the more first lips and second lips are provided, the more frequent sensory feedback by touch and audible clicks are provided while screwing the first connection element into the second connection element. However, the amount of sensory feedback per turn depends on the larger amount of the first lips and the second lips on the respective turn. If for example, the first connection element only comprises one first lip per turn of the male thread, the amount of sensory feedback per turn depends on the amount of second lips of the female thread on the respective turn.

In a preferred embodiment, the female thread of the second connection element comprises only one second lip on every turn of the female thread. Additionally, the male thread of the first connection element comprises several first lips on every turn of the male thread. When screwing the first connection element into the second connection element more torque is needed to overcome the interference between a second lip and each first lip each time a turn is performed. Furthermore, during one turn, every time the second lip interferes with one of the several first lips, a sensory feedback by touch and audible clicks is provided. Thus, the needed torque is only increased once per turn, but several sensory feedbacks are provided.

Preferably, the amount of second lips matches the amount of first lips of the first connection element.

According to an aspect, the present disclosure relates to a connection assembly between a first connection element, as described herein, and a second connection element, as described herein.

### BRIEF DESCRIPTION OF THE DRAWINGS

The subject matter of the invention will be explained in more detail in the following text with reference to preferred exemplary embodiments, which are illustrated in the attached drawings, in which:
- Fig.1: shows a perspective view of a first connection element;
- Fig.1a: shows an enlarged view of a first lip;
- Fig.2: shows a sectional view of a first connection element;
- Fig.3: shows a sectional view of a second connection element;
- Fig.4: shows a sectional view of a first connection element screwed into a second connection element;
- Fig.5: shows an enlarged view of a first lip and a second lip interfering; and
- Fig.6: shows a diagram of a screw force over the amount of rotations of the first connection element while connecting the first connection element with the second connection element.

The reference symbols used in the drawings, and their meanings, are listed in summary form in the list of reference symbols. In principle, identical parts are provided with the same reference symbols in the figures.

### DETAILED DESCRIPTION OF PREFERRED EMBODIMENTS

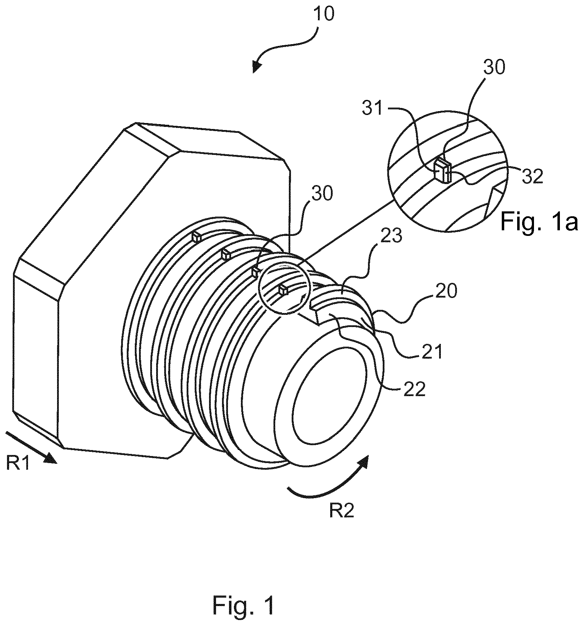

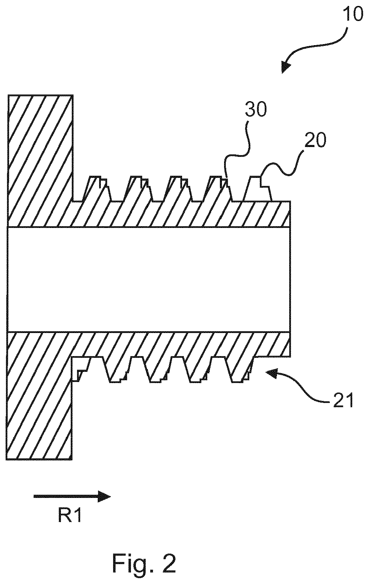

Fig.1, Fig.1a and Fig.2 show a first connection element 10. The first connection element 10 comprises a male external thread 20 in form of a helical ridge. The first connection element 10 can be connected to another connection element, in particular a second connection element 40 by screwing the first connection element 10 in a screw direction R2. The first connection element 10 thereby moves closer to the second connection element 40 in a connection direction R1. The external thread comprises a first inclined portion 22 and a first step portion 23, which are disposed on a first surface 21 of the first connection element 10 pointing in the connection direction R1.

On the first step portion 23, a first lip 30 is provided. The first lip 30 extends in the connection direction R1 within the width of the first step portion 23 and in radial direction within the height of the first step portion 23.

The first lip 30 comprises a first inclined edge portion 32 on a first interference surface 31, which points in the screw direction R2. The first inclined edge portion 32 extends along a radially outwards edge of the first lip 30. This part of the first inclined edge portion 32 is inclined radially inwards in the screw direction R2. Additionally the first inclined edge portion 32 extends along another edge of the first lip 30 pointing in the connection direction R1. This part of first inclined edge portion 32 is inclined axially against the connection direction R1 in the screw direction R2.

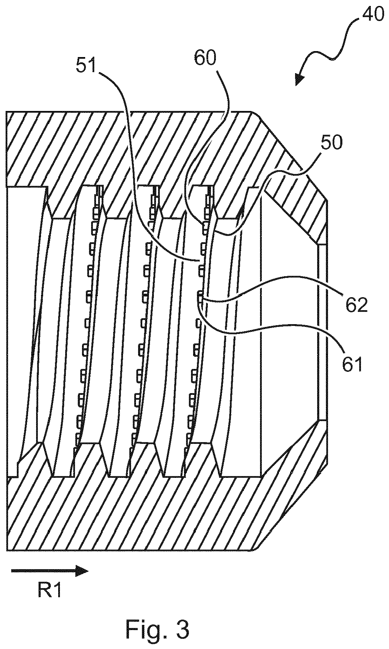

Fig.3 shows a second connection element 40. The connection element 40 comprises a female thread 50 formed helically. The connection element 40 comprises several second lips 60 disposed on a second surface 51 pointing opposed to the connection direction R1. The several second lips 60 are disposed equidistant to each other along the female thread 50. Each second lip 60 comprises a second interference surface 61 pointing opposite to the screw direction R2. On the second interference surface 61, each second lip 60 comprises a second inclined edge portion 62. The second inclined edge portion 62 extends along a radially outwards edge of the second lip 60. This part of the second inclined edge portion 62 is inclined radially inwards in the screw direction R2.

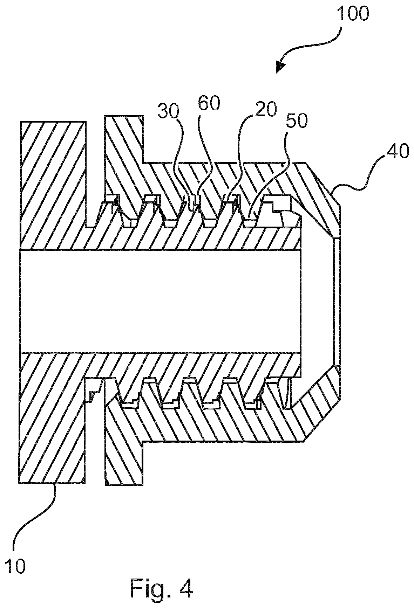

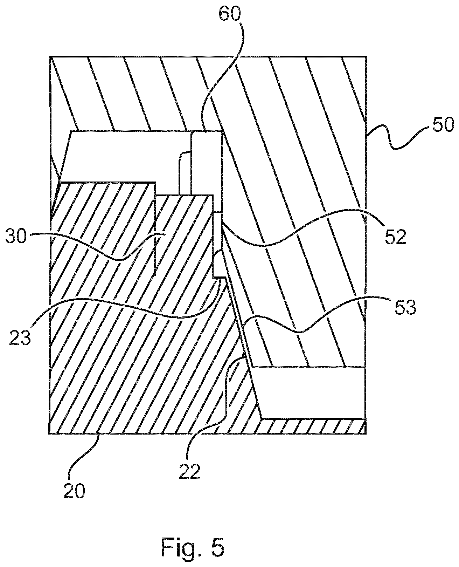

Fig.4 and Fig.5 show a connection assembly 100 comprising the first connection element 10 screwed into the second connection element 40. The first inclined portion 22 and the second inclined portion 53 are at least partially connected to each other and provide friction for the friction connection between the first connection element 10 and the second connection element 40. The first lip 30 and the second lip 60 are disposed in a way that the first lip 30 and the second lip 60 axially interfere when the first connection element 10 is screwed into the second connection element 40.

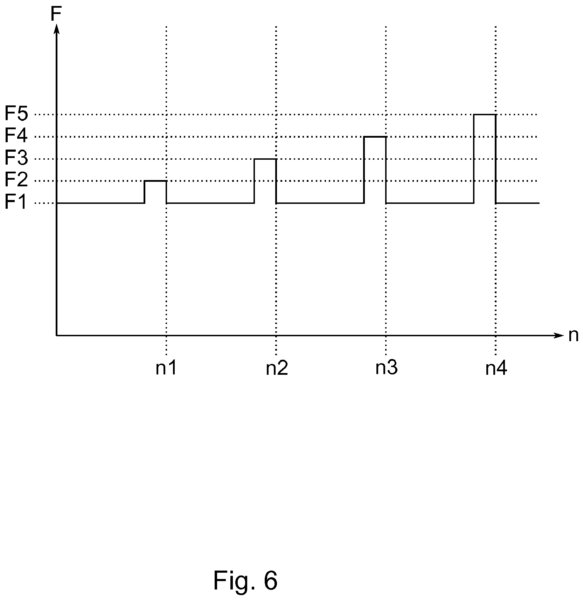

Fig.6 shows a diagram of torque force F, needed to screw the first connection element 10 into the second connection element 40 over the amount of rotations n the connection element 10 has already been screwed into the second connection element 40. The first connection element thereby comprises a first lip 30 on every turn of the male thread 20, as shown in Fig. 1 and the second connection element thereby comprises several second lips 60 on every turn of the female thread 50, for example the second connection element 40 shown in Fig.3.

A first torque force F1 is needed to screw the first connection element 10 into the second connection element 40 when there is no interference between the first lip 30 and the second lip 60.

At the end of the first rotation n1, the first lip on one turn of the male thread interferes with a second lip 60. Therefore, a second torque force F2 is needed to overcome this interference and continue screwing the first connection element 10 into the second connection element 40. After overcoming the interference, the needed torque force F is again the first torque force F1.

When the second rotation n2 of the first connection element 10 is about to be finished, two first lips 30 on different turns of the male thread 20 interfere with respective second lips 60 on different turns of the female thread 50. Therefore, an increased third torque force F3 is needed to overcome the interferences between the first lips 30 and the second lips 60. The third torque force F3 is higher than the first torque force F1 by two times the difference between the first torque force F1 and the second torque force F2. After overcoming the interference, the needed torque force F is again the first torque force F1.

When the third rotation n3 of the first connection element 10 is about to be finished, three first lips 30 on different turns of the male thread 20 interfere with respective second lips 60 on different turns of the female thread 50. Therefore, an increased fourth torque force F4 is needed to overcome the interferences between the first lips 30 and the second lips 60. The fourth torque force F4 is higher than the first torque force F1 by three times the difference between the first torque force F1 and the second torque force F2. After overcoming the interference, the needed torque force F is again the first torque force F1.

When the fourth rotation n4 of the first connection element 10 is about to be finished, four first lips 30 on different turns of the male thread 20 interfere with respective second lips 60 on different turns of the female thread 50. Therefore, an increased fifth torque force F5 is needed to overcome the interferences between the first lips 30 and the second lips 60. The fifth torque force F5 is higher than the first torque force F1 by four times the difference between the first torque force F1 and the second torque force F2. After overcoming the interference, the needed torque force F is again the first torque force F1.

Thus, a nonlinear torque force F is needed to screw the first connection element 10 into the second connection element 40 and therefore to unscrew the first connection element 10 from the second connection element 40. Therefore, the connection between the first connection element 10 and the second connection element 40 is especially vibration and creep resistant. Additionally, then screwing the first connection element 10 into the second connection element 40 a clicking noise is acoustically fed back to the user according to the amount of second lips 60.

### LIST OF REFERENCE SYMBOLS

- 10: first connection element
- 20: male thread
- 21: first surface
- 22: first inclined portion
- 23: step portion
- 30: first lip
- 31: first interference surface
- 32: first inclined edge portion
- 40: second connection element
- 50: female thread
- 51: second surface
- 52: straight portion
- 53: second inclined portion

- 60: second lip
- 61: second interference surface
- 62: second inclined edge portion
- 100: connection assembly
- R1: connection direction
- R2: screw direction

- F: torque force
- F1: first torque force
- F2: second torque force
- F3: third torque force
- F4: fourth torque force
- F5: fifth torque force

- n: rotations
- n1: first rotation
- n2: second rotation
- n3: third rotation
- n4: fourth rotation

## Claims

1. A first connection element (10) for being connected in a connection direction (R1) to a second connection element (40), comprising:
a male thread (20) being configured to be screwed in a screw direction (R2) into a female thread (50) of the second connection element (40); wherein the male thread (20) comprises a first surface (21) pointing in the connection direction (R1); and
at least one first lip (30) being disposed on the first surface (21), such that the first lip (30) axially interferes with a second lip (60) of the second connection element (40) when the first connection element (10) is screwed into the second connection element (40).

2. Connection element of claim 1, wherein
the first surface (21) comprises a first inclined portion (22) and a step portion (23), the first inclined portion (22) being disposed radially inside of the step portion (23); wherein
the first lip (30) is disposed on the step portion (23).

3. Connection element of claims 1 or 2, wherein
the first lip (30) comprises a first interference surface (31) pointing in the screw direction (R2); wherein
the first lip (30) comprises a first inclined edge portion (32) on the first interference surface (31); wherein
the second lip (60) of the second connection element (40) interferes with the first lip (30) at the inclined edge portion (32) when the first connection element (10) is screwed into the second connection element (40).

4. Connection element of any of claims 1 to 3, wherein
the male thread (20) comprises several turns; wherein
on every turn only one first lip (30) is disposed; wherein preferably
the first lips (30) are disposed equidistant to each other along the male thread (20).

5. Connection element of any of claims 1 to 4, wherein
the amount of first lips (30) of the first connection element (10) matches the amount of second lips (60) of the second connection element (40).

6. A second connection element (40) for being connected in a connection direction (R1) to a first connection element (10), comprising:
a female thread (50) being configured to receive a male thread (20) of the first connection element (10); wherein the female thread (50) comprises a second surface (51) pointing away from the connection direction (R1);
at least one second lip (60) being disposed on the second surface (51), such that the second lip (60) axially interferes with a first lip (30) of the first connection element (10) when the first connection element (10) is screwed into the second connection element (40).

7. Connection element of claim 6, wherein
the second surface (51) comprises a straight portion (52) and a second inclined portion (53), the second inclined portion (53) being disposed radially inside of the straight portion (52); wherein
the second lip (60) is disposed on the straight portion (52).

8. Connection element of any of claims 6 or 7, wherein
the second lip (60) comprises a second interference surface (61) pointing opposite to the screw direction (R1); wherein
the second lip (60) comprises a second inclined edge portion (62) on the second interference surface (61); wherein
the first lip (30) of the first connection element (10) interferes with the second lip (60) at the second inclined edge portion (62) when the first connection element (10) is screwed into the second connection element (40).

9. Connection element of any of claims 6 to 8, wherein
The female thread (50) comprises several female turns; wherein
on every female turn several second lips (60) are disposed; wherein preferably
the second lips are disposed equidistant to each other on each turn.

10. Connection element of any of claims 6 to 9, wherein
the amount of second lips (60) matches the amount of first lips (30) of the first connection element (10).

11. Connection assembly (100) between a first connection element (10) of any of claims 1 to 5 and a second connection element (40) of any of claims 6 to 10.
